# EUROPÄISCHE PATENTSCHRIFT

(11) **EP 3 424 292 B1**
(45) Veröffentlichungstag und Bekanntmachung des Hinweises auf die Patenterteilung: **04.03.2020**
(21) Anmeldenummer: 17179740.0
(22) Anmeldetag: 05.07.2017
(51) Int. Cl.: A01D 34/40, A01D 41/14

(54) **VERFAHREN ZUR ANALYSE DES BETRIEBSZUSTANDES EINES SCHNEIDWERKS UND SCHNEIDWERK**
METHOD FOR ANALYSING THE OPERATING STATE OF A CUTTING SYSTEM AND CUTTING SYSTEM
PROCÉDÉ D'ANALYSE DE L'ÉTAT DE FONCTIONNEMENT D'UNE BARRE DE COUPE ET BARRE DE COUPE

(43) Veröffentlichungstag der Anmeldung: 09.01.2019
(73) Patentinhaber: SMF - Holding GmbH, 57612 Eichelhardt (DE)
(72) Erfinder: SCHMIDT, Ralf, 57629 Mörsbach (DE); GÜRKE, Steffen, 51570 Windeck-Halscheid (DE); OTTO, Sascha, 57612 Racksen (DE)
(74) Vertreter: Neumann Müller Oberwalleney & Partner Patentanwälte

(56) Entgegenhaltungen:
- EP-A1- 3 095 314
- EP-A1- 3 167 701
- US-A1- 2016 084 987

## Beschreibung

Die Erfindung betrifft ein Verfahren und ein Schneidwerk zur Analyse des Betriebszustandes eines Schneidwerks einer Erntemaschine, wie zum Beispiel eines Mähdreschers.

Bei heutigen Erntemaschinen gewinnt die Analyse der Betriebszustände einzelner Komponenten der Erntemaschinen immer weiter an Bedeutung. Um die Ernteleistung zu erhöhen, ist zum Beispiel angestrebt, die Fahrgeschwindigkeit der Erntemaschine zu maximieren ohne dabei Verstopfungen im Erntegutfluss zu riskieren. Hierfür ist zum Beispiel die Ermittlung des aktuellen Erntegutflusses entscheidend, um diesen je nach Bestandsdichte des Erntegutes möglichst auf einen maximalen Wert zu regeln. Die zur Ermittlung des Erntegutflusses erforderlichen Sensoren sind bisher meistens in nachgelagerten Komponenten der Erntemaschine zur Verarbeitung des geschnittenen Ernteguts oder in Fördereinrichtungen der Erntemaschine angeordnet.

Um möglichst frühzeitig während des Erntevorgangs Messwerte über den Betriebszustand, wie zum Beispiel die Gutflussmenge, zu erhalten, schlägt US 2016/0084987 A1 vor, im Vorsatzgerät eines Mähdreschers Sensoren vorzusehen, die die Ertragsmenge bzw. deren Variabilität zu ermitteln. Bei den Sensoren kann es sich zum Beispiel um Drehmomentsensoren von drehend angetriebenen Schneidwerkzeuge handeln. Mit Hilfe der mit diesen Sensoren ermittelten Daten lässt sich eine geografische Karte erstellen, die für jede Geoposition des Ernteguts die Bestandsdichte auf dem Feld aufzeichnet. Diese Daten können dann für die Anpassung der Ausbringung von Saatgut und Dünger verwendet werden, ebenso wie für Leistungsanpassungen oder -steuerung bei einem nochmaligen Erntevorgang.

Das Dokument EP 3 167 701 A1 beschreibt ein Schneidwerk für eine landwirtschaftliche Erntemaschine nach dem Oberbegriff des Anspruchs 9.

Aufgabe der vorliegenden Erfindung ist es, ein Verfahren und ein Schneidwerk zur Analyse des Betriebszustandes des Schneidwerks einer Erntemaschine bereitzustellen, das für hin und her angetriebene Mähmesser besonders geeignet ist.

Die Aufgabe wird durch ein Verfahren zur Analyse des Betriebszustandes eines Schneidwerks zum Mähen von Erntegut, wobei das Schneidwerk zumindest ein in einer Hubrichtung hin und her angetriebenes Mähmesser aufweist und das Mähmesser Schneiden aufweist, die mit Gegenschneiden des Schneidwerks zusammenwirken, mit den folgenden Verfahrensschritten gelöst:
Erfassen eines die Hubposition des Mähmessers repräsentierenden Signals,
Erfassen eines die Messerkraft zum Antreiben des Mähmessers repräsentierenden Signals in Abhängigkeit der Hubposition, und
Bestimmung von Erntegut- und/oder Schnittsystemeigenschaften anhand einer Auswertung des die Messerkraft repräsentierenden Signals in Abhängigkeit der Hubposition.

Hierbei ist der Betriebszustand des Schneidwerks im engeren Sinne gleichzusetzen mit den Erntegut- und/oder Schnittsystemeigenschaften und kann auch weitere darüber hinausgehende Eigenschaften des Schneidwerks umfassen. Das Schnittsystem umfasst hierbei das Mähmesser und die die Gegenschneiden tragenden Bauteile, wie zum Beispiel Mähfingern oder ein stationäres oder bewegtes Gegenmesser. Grundsätzlich ist es auch denkbar, dass ein, die Mähfinger tragender, Fingerbalken relativ zum Mähmesser bewegt angetrieben ist.

Die Messerkraft kann entweder die Kraft sein, die insgesamt zum Antreiben des Mähmessers erforderlich ist, also eine Kraft, die sich zum Beispiel mit einem Kraftsensor zwischen einem Antrieb zum Antreiben des Mähmessers und dem Mähmesser selbst messen ließe. Mit dem Begriff "Messerkraft" können im Sinne der Erfindung jedoch auch einzelne Messerkraftkomponenten gemeint sein, wie zum Beispiel die Summe aus Reibkraft und Schnittkraft, wobei Messerkraftkomponenten aufgrund von Massenträgheitskräften und Eigenschwingungen des Mähmessers unberücksichtigt bleiben können.

Das die Hubposition des Mähmessers repräsentierende Signal kann zum Beispiel von einem Positionsgeber am Mähmesser oder ein mit dem Mähmesser hin und her bewegtes Bauteil sein. Es ist auch möglich, die Hubposition auf Basis einer Drehposition eines sich rotierenden Antriebselement zum Antreiben des Mähmesser zu ermitteln.

Das die Messerkraft zum Antreiben des Mähmessers repräsentierende Signal kann zum Beispiel ein Messsignal eines Kraftsensors zwischen einem hin und her bewegten Antriebselement zum Antreiben des Mähmessers und Mähmesser sein. Denkbar ist auch, dass ein Drehmomentsensor an einem sich rotierenden Antriebselement zum Antreiben des Mähmesser vorgesehen ist, über den das Antriebsdrehmoment ermittelt wird. Das Antriebsdrehmoment kann in die Messerkraft umgerechnet werden oder unmittelbar als das die Messerkraft zum Antreiben des Mähmessers repräsentierende Signal verwendet werden, sofern sich das Antriebsmoment direkt proportional zur Messerkraft verändert. Aus den so ermittelten Größen kann zudem die Antriebsleistung abgeleitet werden, die ebenfalls zur weiteren Auswertung herangezogen werden kann.

Ein hin und her angetriebenes Mähmesser hat in unterschiedlichen Hubpositionen während eines Hubvorgangs unterschiedliche Betriebscharakteristika. Zum Beispiel unterscheidet sich die erforderliche Kraft zum Antreiben des Mähmessers sowie die Leistungsaufnahme in den Umkehrbereichen bei Antriebsrichtungsumkehr von denen in den übrigen Bereichen. Zudem gibt es Hubbereiche, in denen ein Schnittvorgang des Ernteguts stattfindet und die Messerkraft entsprechend hoch ist, und Hubpositionsbereiche, in denen kein Schnittvorgang stattfindet und die Messerkraft entsprechend gering ist. Zum Beispiel kann die erforderliche Kraft zum Antreiben des Mähmessers bzw. die Antriebsleistung in unterschiedlichen Schnittpositionsbereichen mehrerer Hübe Informationen zur Analyse des Betriebszustandes des Schneidwerks liefern.

Die Bestimmung von Mähgut- und/oder Schnittsystemeigenschaften kann in einer Ausgestaltung des Verfahrens eine Eigenschaft aus der Gruppe bestehend aus Bestandsdichte des Ernteguts, Erntegutart, Erntegutfeuchte, Unkrautbestandteile, Kollision, Verschleißzustand des Schneidwerks und Defekt des Schneidwerks umfassen.

Mithilfe von Daten zu der Bestandsdichte des Ernteguts, Erntegutart und/oder Erntegutfeuchte kann die Leistungsaufnahme bzw. die erforderliche Antriebsleistung im Gutfluss dem Schneidwerk nachgelagerter Einheiten der Erntemaschine, wie zum Beispiel einer Drescheinheit oder Häckseleinheit, prognostiziert werden und/oder in einen Regelkreis zum Regeln des Erntegutflusses zugeführt werden.

Diese Daten können auch in die Steuerung der Fahrgeschwindigkeit der Erntemaschine einfließen. Bei sich reduzierender Bestandsdichte kann die Fahrgeschwindigkeit erhöht werden und bei sich erhöhender Bestandsdichte kann die Fahrgeschwindigkeit reduziert werden, um stets einen möglichst gleichmäßigen Erntegutfluss und damit eine konstante Auslastung der das Erntegut verarbeitenden Einheiten der Erntemaschine zu gewährleisten.

Die Hubbewegung des Mähmessers kann über den gesamten Hub des Mähmessers in verschiedene Hubpositionsbereiche eingeteilt werden, wobei auch zwischen Hubpositionsbereichen in einer ersten Hubrichtung und Hubpositonsbereichen in einer zweiten Hubrichtung unterschieden werden kann.

Insbesondere wenn ein Mähmesser verwendet wird, dass eine Vielzahl von Schneiden aufweist, die mit Gegenschneiden des Schneidwerks zum Schneiden des Ernteguts zusammenwirken, kann vorgesehen sein, dass diejenigen Hubpositionsbereiche, in denen die Schneiden des Mähmessers mit den Gegenschneiden einen Schnitt des Ernteguts durchführen, als Schnittbereiche definiert werden.

Somit kann durch die Analyse von zeitlich nacheinander vorgenommenen Messungen der Messerkraft in Schnittbereichen die Varianz der Bestandsdichte des Mähguts ermittelt werden. Je höher die Bestandsdichte des Mähguts ist, umso höher ist die erforderliche Kraft (Messerkraft), bzw. die Leistung, zum Antreiben des Mähmessers, sodass über die Veränderung der Messerkraft in aufeinanderfolgenden Schnittbereichen auf die Varianz der Bestandsdichte geschlossen werden kann. Hierbei kann zudem auf Referenzdaten zu bestimmten Erntegutarten rückgegriffen werden, um ggf. neben der Varianz der Bestandsdichte auch auf einen Absolutwert der Bestandsdichte schließen zu können.

Die Gegenschneiden eines Schneidwerks befinden sich in aller Regel an Mähfinger oder an Messerklingen eines Gegenmessers. Diejenigen Hubpositionsbereiche, in denen die Schneiden des Mähmessers an den Mähfingern oder den Messerklingen des Gegenmessers vorbei oder hindurch geführt werden, ohne einen Schnitt des Ernteguts durchzuführen, können als Überhubbereiche definiert werden.

Insbesondere bei der Verwendung von Mähfingern mit Ober- und Unterteil, die einen Messerspalt bilden, durch den das Mähmesser hindurch geführt wird, wird der Messerspalt während dieses Überhubbereichs von möglicherweise eingezogenen nicht geschnittenen Erntegut gesäubert bzw. befreit.

Sofern in dem Überhubbereich eine höhere Messerkraft zum Antreiben des Mähmessers erforderlich ist als in zeitlich vorhergehenden Messungen oder verglichen zu Referenzwerten, kann darauf geschlossen werden, dass eine erhöhte Anzahl von Erntegutbestandteilen zwischen gegeneinander laufende Messerklingen oder in Messerspalte von Mähfingern hineingezogen und somit nicht geschnitten wurden. Dies kann zum Beispiel auf eine erhöhte Feuchtigkeit des Ernteguts oder auf andere Bestandteile im zu schneidenden Erntegut, wie zum Beispiel Unkraut, zurückzuführen sein.

Ferner können diejenigen Hubpositionsbereiche, in denen die Schneiden des Mähmessers zwischen zwei benachbarten Gegenschneiden bzw. Mähfingern bewegt werden, als schnittunabhängige Bereiche definiert werden. In diesen Bereichen findet weder ein Schnitt von Erntegut statt noch ein Säubern eines Klingenspalts von Mähfingern.

Wenn sich über die schnittunabhängigen Bereiche hinweg eine erhöhte Leistungsaufnahme zeigt, kann dies auf eine Kollision oder einen Defekt des Schneidwerks deuten.

Bei der Ermittlung der Messerkraft (oder Leistung) kann die durchschnittliche und/oder die maximale Messerkraft (oder Leistung) zum Antreiben des Mähmessers in bestimmten Hubpositionen ermittelt werden.

Das Überschreiten einer bestimmten maximalen Grenzwertes kann auf eine Kollision des Schneidwerks mit einem nicht schneidbaren Gegenstandes, wie zum Beispiel einem Stein, einem Haspelzinken oder sonstigen Fremdkörper, hindeuten.

In einer Ausgestaltung des Verfahrens ist vorgesehen, dass die durchschnittliche und/oder maximale Messerkraft zum Antreiben des Mähmessers verschiedener Hubpositionsbereiche eines einzelnen Hubs des Mähmessers miteinander verglichen werden. Es ist auch möglich, den Messerkraftverlauf über einen einzelnen gesamten Hub des Mähmessers aufzuzeichnen. Diese Auswertung des Messerkraftverlaufs über einen einzelnen Hub oder der Vergleich der Messerkraft in einzelnen Hubpositionsbereiche eines einzelnen Hubs können Aufschluss über die Ernteguteigenschaften oder den Schneidwerkszustand liefern.

In einer anderen Ausgestaltung kann vorgesehen sein, dass die durchschnittliche und/oder maximale Messerkraft zum Antreiben des Mähmessers von gleichen Hubpositionsbereichen verschiedener Hübe des Mähmessers miteinander verglichen werden. Somit werden verschiedene nacheinander durchgeführte Hübe dahingehend miteinander verglichen, wie die Messerkraft in den einzelnen Hubpositionsbereichen verläuft. Ebenso kann jeweils ein Messerkraftverlauf über die einzelnen Hübe ermittelt werden, wobei die zeitlich nacheinander liegenden Messerkraftverläufe miteinander verglichen werden. Somit lässt sich eine zeitliche Varianz der Messerkraft analysieren.

In einer weiteren Ausgestaltung des Verfahrens ist vorgesehen, dass die durchschnittliche und/oder maximale Messerkraft zum Antreiben des Mähmessers eines Hubpositionsbereichs mit einem Referenzwert für diesen Hubpositionsbereich verglichen wird. Alternativ oder zusätzlich kann auch der Messerkraftverlauf eines einzelnen Hubs mit einem Referenzmesserkraftverlauf verglichen werden.

Die Erfindung wird ferner durch ein Schneidwerk für eine landwirtschaftliche Erntemaschine zum Mähen von Erntegut gelöst, welche Folgendes aufweist: zumindest ein in einer Hubrichtung hin und her angetriebenes Mähmesser; einen das Mähmesser antreibenden Antrieb; einen Sensor zum Erfassen eines die Hubposition des Mähmessers repräsentierenden Signals; einen Sensor zum Erfassen eines die Messerkraft zum Antreiben des Mähmessers repräsentierenden Signals; und eine Verarbeitungseinheit zum Auswerten und Aufzeichnen der erfassten Signale.

Generell kann das Schneidwerk mehrere Mähmesser und je Mähmesser zumindest einen Sensor zum Erfassen eines die Hubposition des Mähmessers repräsentierenden Signals und zumindest einen Sensor zum Erfassen eines die Messerkraft zum Antreiben des Mähmessers repräsentierenden Signals aufweisen.

Jedem Mähmesser kann eine einzelne Verarbeitungseinheit zugeordnet sein. In einer Ausgestaltung können die einzelnen Verarbeitungseinheiten jedes Mähmessers zum Datenaustausch mit einer zentralen Verarbeitungseinheit des Schneidwerks verbunden sein.

Die Erfindung wird im Folgenden anhand der Zeichnungen näher erläutert. Hierin zeigen:
- Figur 1: eine schematische Draufsicht eines Mähdreschers im Bereich des Schneidwerks mit einem Mähmesser,
- Figur 2: eine schematische Draufsicht eines Mähdreschers im Bereich des Schneidwerks mit zwei Mähmessern,
- Figur 3: eine schematische Draufsicht auf einen Doppelfinger und eine Messerklinge in unterschiedlichen Hubpositionen in einem schnittunabhängigen Bereich,
- Figur 4: eine schematische Draufsicht auf einen Doppelfinger und eine Messerklinge in unterschiedlichen Hubpositionen in einem Schnittbereich,
- Figur 5: eine schematische Draufsicht auf einen Doppelfinger und eine Messerklinge in unterschiedlichen Hubpositionen in einem Überhubbereich,
- Figur 6: einen Teillängsschnitt durch das Schneidwerk im Bereich eines Mähfingers,
- Figur 7: einen Regelkreis zur Regelung der Motorauslastung einer Erntemaschine und
- Figur 8: einen kaskadierten Regelkreis zur Regelung der Motorauslastung einer Erntemaschine.

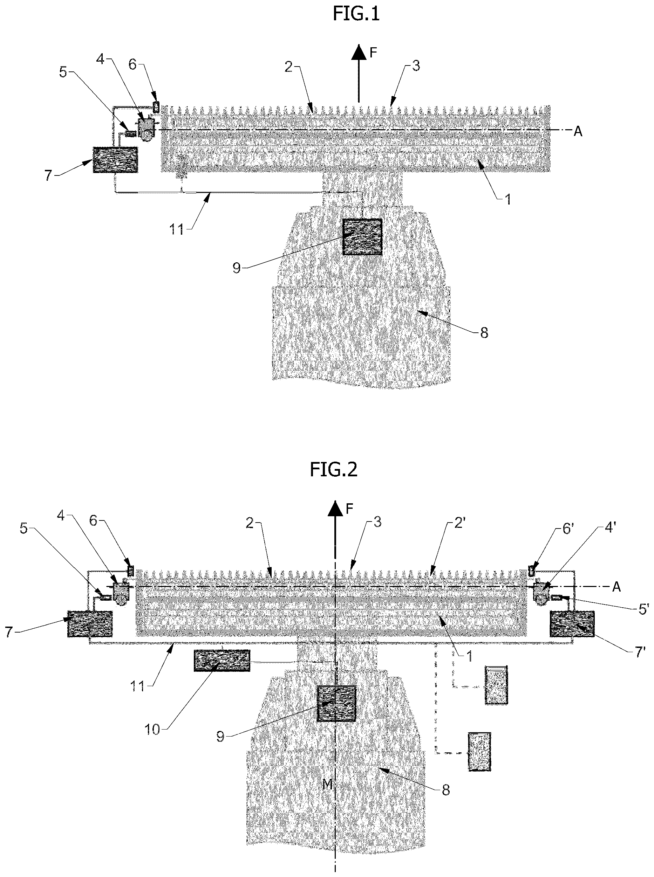

Die Figuren 1 und 2 zeigen jeweils eine schematische Draufsicht einer landwirtschaftlichen Erntemaschine in Form eines Mähdreschers 8, der in einer Fahrtrichtung F parallel zu einer Mittelachse M des Mähdreschers 8 bewegbar ist. Der Mähdrescher 8 ist ausschnittsweise in einem vorderen Bereich dargestellt, an dem der Mähdrescher 8 ein Schneidwerk 1 zum Mähen von Erntegut aufweist. Die Schneidwerke 1 gemäß Figur 1 und Figur 2 unterscheiden sich dadurch, dass das Schneidwerk 1 in Figur 1 ein Mähmesser 2 aufweist und das Schneidwerk 1 gemäß Figur 2 zwei Mähmesser 2, 2' aufweist. Die Mähmesser 2, 2' sind entlang einer Antriebsachse A hin- und herbewegbar angetrieben. Die Antriebsachse A verläuft in einem rechten Winkel zur Mittelachse M und somit quer zur Fahrtrichtung F. Die Mähmesser 2, 2' gemäß Figur 2 sind beidseitig der Mittelachse M angeordnet und können jeweils separat angetrieben sein.

Die Mähmesser 2, 2' beider Ausführungsformen gemäß Figur 1 und gemäß Figur 2 weisen jeweils Messerklingen 3 auf, die mit hier nicht dargestellten Gegenschneiden zusammenwirken, um bei der Hin- und Herbewegung des Mähmessers 2, 2' eine Schnittbewegung durchzuführen.

Das Mähmesser 2 des Schneidwerks 1 der Ausführungsform nach Figur 1 ist mit einem Antrieb 4 antriebsverbunden, über den das Mähmesser 2 hin- und herbewegt angetrieben ist. Der Antrieb 4 kann zum Beispiel ein Getriebe umfassen, beispielsweise ein Zahnradgetriebe, ein Zugmittelgetriebe oder ähnliches Getriebe. Der Antrieb 4 wiederum kann mechanisch, hydraulisch oder elektrisch über einen Antriebsmotor des Mähdreschers 8 angetrieben werden.

An dem Schneidwerk 1 ist zumindest ein Sensor 5 zur Ermittlung der Messerkraft vorgesehen. Bei dem Sensor kann es sich zum Beispiel um einen Kraftsensor oder einen Drehmomentsensor handeln, wobei mittels der unmittelbar gemessenen Messwerte auch auf andere Messgrößen, wie zum Beispiel die Leistung, geschlossen werden kann. Darüber hinaus ist an dem Schneidwerk 1 ein Sensor 6 für die Bestimmung der Hubposition des Mähmessers 2 angeordnet.

Die von den Sensoren 5 und 6 ermittelten Messwerte werden an eine Verarbeitungseinheit 7 für den Antrieb 4 weitergeleitet. In der Verarbeitungseinheit 7 werden die Messwerte aufgezeichnet und ausgewertet. Die Verarbeitungseinheit 7 kann ferner mit einem Steuergerät 9 des Mähdreschers 8 verbunden sein. Hierdurch kann zum Beispiel in die Antriebssteuerung der das Erntegut verarbeitenden Einheiten oder in die Motorsteuerung eingegriffen werden, um zum Beispiel die Fahrgeschwindigkeit des Mähdreschers 8 anzupassen.

In Figur 2 sind je Mähmesser 2, 2' ein Antrieb 4, 4', ein Sensor 5, 5' zur Ermittlung der Messerkraft und ein Sensor 6, 6' für die Hubposition des jeweiligen Mähmessers 2, 2' vorgesehen. Die Sensoren 5, 5', 6, 6' zu einem Mähmesser 2, 2' sind jeweils einer Verarbeitungseinheit 7, 7' zugeordnet. Es kann zudem, wie dargestellt, eine zentrale Verarbeitungseinheit 10 für das Schneidwerk 1 vorgesehen sein, welche mit den beiden Verarbeitungseinheiten 7, 7' für den Antrieb 4, 4' verbunden ist. Die zentrale Verarbeitungseinheit 10 für das Schneidwerk 1 kann wiederum mit dem Steuergerät 9 des Mähdreschers 8 verbunden sein. Es ist jedoch auch möglich, dass die Verarbeitungseinheiten 7, 7' der Antriebe 4, 4' unmittelbar mit dem Steuergerät 9 des Mähdreschers verbunden sind.

Zur Datenübermittlung zwischen den einzelnen Verarbeitungseinheiten 7, 7', 10 und dem Steuergerät 9 sind Datenleitungen 11 vorhanden.

In einer der Verarbeitungseinheiten 7, 7', 10 des Schneidwerks 1 wird die Messerkraft zum Antreiben des jeweiligen Mähmessers 2, 2' in bestimmten Hubpositionen oder Hubpositionsbereichen ermittelt bzw. anhand der Messwerte der Sensoren 5, 5', 6, 6' berechnet. Hierzu kann vorgesehen sein, dass die Hubbewegung der Mähmesser 2, 2' über den gesamten Hub des jeweiligen Mähmessers 2, 2' in verschiedene Hubpositionsbereiche eingeteilt wird.

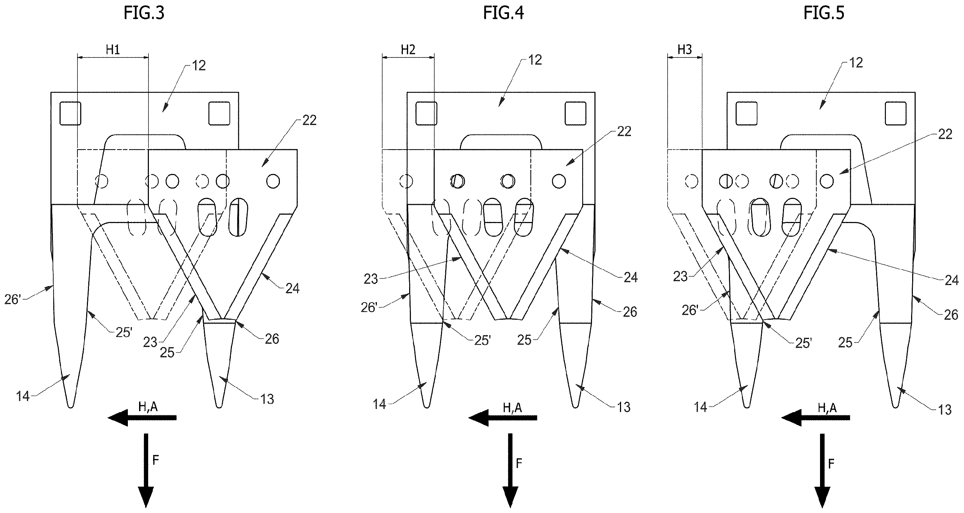

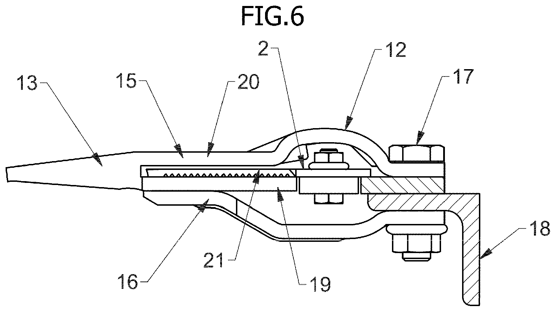

Die Figuren 3 bis 5 zeigen unterschiedliche Darstellungen des Schneidwerks 1 im Bereich eines Doppelfingers 12, der zwei in Fahrtrichtung F vorstehende Finger 13, 14 aufweist, wobei die beide Finger 13, 14 seitlich beabstandet zueinander angeordnet sind. Der Doppelfinger 12 weist, wie in Figur 6 dargestellt, ferner ein Oberteil 15 und ein Unterteil 16 auf, die miteinander fest verbunden sind. An einem in Fahrtrichtung F betrachtet hinteren Ende sind das Oberteil 15 und das Unterteil 16 über Befestigungsschrauben 17 mit einem Mähbalken 18 des Schneidwerks verbunden.

Zwischen dem Oberteil 15 und dem Unterteil 16 ist ein Mittelteil 19 angeordnet, wobei zwischen dem Mittelteil 19 und einem oberen Steg 20 des Oberteils 15 ein Messerspalt 21 gebildet ist. In dem Messerspalt 21 ist das Mähmesser 2 geführt.

Das Mähmesser 2 weist Messerklingen 22 auf, die in dem Messerspalt 21 geführt sind. Die Messerklingen 22 weisen in Antriebsachse A betrachtet beidseitig Schneider 23, 24 (Figuren 3 bis 5) auf, die mit Gegenschneiden 25, 26 der Finger 13, 14 zusammenwirken, um Erntegut zu schneiden.

Grundsätzlich können auch andere Finger zum Einsatz kommen, wie beispielsweise einfache Finger mit jeweils nur einem Finger, der in Richtung nach vorne steht, oder Mehrfachfinger, die mehr als zwei Finger aufweisen. Ebenso können Finger eingesetzt werden, die nicht ein Oberteil aufweisen, sondern lediglich ein Unterteil. Darüber hinaus kann alternativ zu den Fingern auch ein Gegenmesser vorgesehen sein, das ähnlich dem Mähmesser aufgebaut ist und entsprechend mit Messerklinge ausgestattet ist.

Die Figuren 3 bis 5 zeigt zur Vereinfachung nur den Doppelfinger 12 und eine Messerklinge 22 in verschiedenen Hubpositionen relativ zum Doppelfinger 12, wobei das Oberteil des Doppelfingers 12 der Übersichtlichkeit halber nicht dargestellt ist. In jeder der Figuren 3 bis 5 ist die Messerklinge 22 in zwei Hubpositionen gezeigt, zum einen in einer Ausgangsposition, in der die Messerklinge mit durchgezogenen Linien dargestellt ist, und in einer Endposition, in der die Messerklinge 22 mit unterbrochenen Linien dargestellt ist. Die jeweiligen Ausgangspositionen und Endpositionen definieren den Anfang und das Ende verschiedener Hubpositionsbereiche.

Ausgehend von Figur 3 über Figur 4 bis Figur 5 ist ein vollständiger Hub des Mähmessers dargestellt, und zwar in einer Hubrichtung H parallel zur Antriebsachse A. Figur 3 zeigt hierbei einen ersten Hubbereich H1 von einer in Figur 3 rechts angeordneten Wendepunkt, in dem sich die Bewegungsrichtung des Mähmessers und damit der dargestellten Messerklinge 22 des Mähmessers umkehrt, und zwar in der Darstellung nach links. Ausgehend von dem rechten Wendepunkt, in dem die Messerklinge 22 mit durchgezogenen Linien dargestellt ist, wird die Messerklinge 22 bis zu einer ersten Zwischenposition bewegt, in der die Messerklinge 22 mit unterbrochenen Linien dargestellt ist. Über diesen ersten Hubbereich H1, der auch als schnittunabhängiger Bereich bezeichnet werden kann, kreuzt die in Hubrichtung H vorne liegende Schneide 23 der Messerklinge 22 nicht die Gegenschneide 25' des linken Fingers 14, so dass kein Schnitt durchgeführt wird.

Figur 4 zeigt einen zweiten Hubbereich H2 von der in Figur 4 rechts gezeigten ersten Zwischenstellung, in der die Messerklinge 22 mit durchgezogenen Linien dargestellt ist, bis zum Erreichen einer zweiten Zwischenposition links, in der die Messerklinge 22 mit unterbrochenen Linien dargestellt ist. Über diesen zweiten Hubbereich H2, der auch als Schnittbereich bezeichnet werden kann, kreuzt die in Hubrichtung H vorne liegende Schneide 23 der Messerklinge 22 die Gegenschneide 25' des linken Fingers 14, so dass eine Schnittbewegung erfolgt.

Figur 5 zeigt einen dritten Hubbereich H3 von der in Figur 5 rechts gezeigten zweiten Zwischenstellung, in der die Messerklinge 22 mit durchgezogenen Linien dargestellt ist, bis zum Erreichen eines linken Wendepunktes, in dem die Messerklinge 22 mit unterbrochenen Linien dargestellt ist. Am linken Wendepunkt ändert sich die Hubrichtung von einer Linksbewegung in eine Bewegung zurück nach rechts. Über diesen dritten Hubbereich H3, der auch als Überhubbereich bezeichnet werden kann, wird das Mähmesser 2 an dem linken Finger 14 vorbei bzw. durch diesen hindurch geführt, ohne dass ein Schnitt des Ernteguts erfolgt.

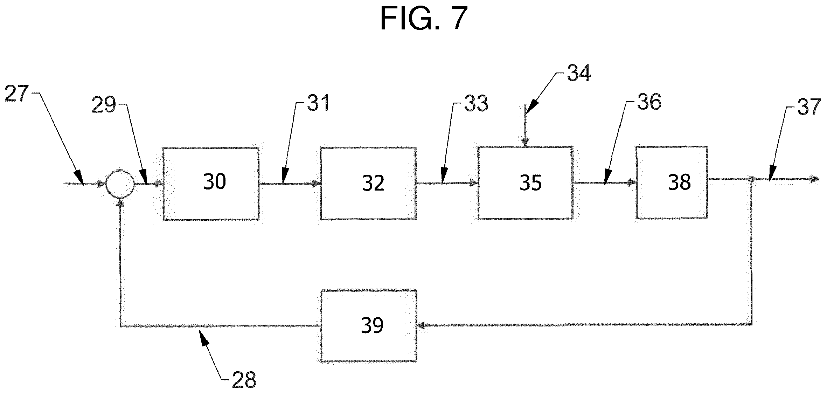

Figur 7 zeigt einen herkömmlichen beispielhaften Regelkreis zur Regelung der Motorauslastung. Die Führungsgröße 27 ist der Sollwert der Motorauslastung und die Rückführung 28 ist der Istwert der Motorauslastung. Diese beiden Werte zusammen ergeben die Regelabweichung 29, welche einem Regler zur Regelung der Motorauslastung zugeführt wird. Der Regler 30 gibt einen Sollwert als (allgemeine) Stellgröße 31 für die Fahrgeschwindigkeit aus. Die Stellgröße 31 der Fahrgeschwindigkeit 31 wird einem Stellglied 32 zur Regelung des Fahrantriebs zugeführt, wobei sich hieraus ein Istwert der Fahrgeschwindigkeit 33 (als Stellgröße) ergibt. Aufgrund der Schneidwerkseinstellungen, Bestandseigenschaften und Arbeitsbreite des verwendeten Schneidwerks, die als Störgrößen 34 eingehen, ergibt sich über die Regelstrecke 35 ein Durchsatz 36 des Schneidwerks. Der Durchsatz der Erntemaschine 37 lässt sich in den dem Schneidwerk nachgelagerten Verarbeitungseinheiten, wie beispielsweise eines Druschorgans, erst nach einer Totzeit 38 feststellen, da das Erntegut erst vom Schneidwerk zu dem Druschorgan transportiert werden muss.

Die Regelgröße des Durchsatzes der Erntemaschine 37 wird über das Messglied 39 des Hauptmotors als Motorauslastungs-Istwert 28 zurückgeführt.

Erntemaschinen, insbesondere Mähdrescher, sind in ihrer Druschleistung durch die Motorleistung begrenzt. Um lokale Erhöhungen der Bestandsdichte bewältigen zu können, muss eine Leistungsreserve für den Motor vorgehalten werden, damit Druschorgane nicht verstopfen sondern bestandsdichte Spitzen abfangen können. Durch die Transporttotzeit des Ernteguts vom Schneidwerk zum Druschorgan reagieren herkömmliche Regelungen, wie sie in Figur 7 dargestellt ist, erst auf veränderte Bestandsdichten, wenn das Erntegut bereits in dem Druschorgan angekommen ist. Geregelt wird hierbei der Durchsatz der Erntemaschine. Als Stellgröße dient hierbei die Fahrgeschwindigkeit.

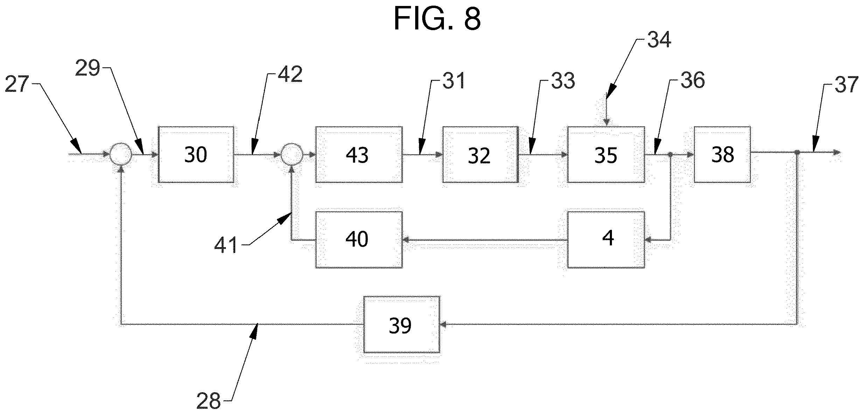

Figur 8 zeigt eine angepasste Regelung. Der Regelkreis ist zunächst so aufgebaut, wie der Regelkreis gemäß Figur 7. Jedoch wird der Durchsatz des Schneidwerks 36 bereits in einer kaskadierten Regelung zurückgeführt. Hierzu dienen die oben beschriebenen Sensoren am Schneidwerk, die hier als Messglied 40 angegeben sind. Diese geben zum Beispiel die erforderliche Leistung des Messerantriebs 41 aus. Diese wird mit einer Sollgröße der Messerantriebsleistung 42 einem Regler 43 zum Regeln der Schnittsystemauslastung zugeführt. Der Regler 30 für die Motorauslastung gibt hierbei nicht einen Fahrgeschwindigkeitssollwert aus, sondern den Sollwert 42 für den Messerantrieb. Der Regler für die Schnittsystemauslastung 43 gibt letztendlich den Sollwert für die Fahrgeschwindigkeit 31 aus.

Somit ergibt sich ein Regelkreis, der Bestandsschwankungen erfasst, bevor diese an dem Druschorgan Auswirkungen haben und kann daher schneller reagieren.

### Bezugszeichenliste

- 1: Schneidwerk
- 2, 2': Mähmesser
- 3: Messerklinge
- 4, 4': Antrieb
- 5, 5': Sensor für Messerkraft
- 6, 6': Sensor für Hubposition
- 7, 7': Verarbeitungseinheit für den Antrieb
- 8: Mähdrescher
- 9: Steuergerät für den Mähdrescher
- 10: Verarbeitungseinheit für das Schneidwerk
- 11: Datenleitung
- 12: Doppelfinger
- 13: Finger
- 14: Finger
- 15: Oberteil
- 16: Unterteil
- 17: Befestigungsschrauben
- 18: Mähbalken
- 19: Mittelteil
- 20: oberer Steg
- 21: Messerspalt
- 22: Messerklinge
- 23: Schneide
- 24: Schneide
- 25, 25': Gegenschneide
- 26, 26': Gegenschneide
- 27: Führungsgröße (Sollwert)
- 28: Rückführung (Istwert)
- 29: Regelabweichung
- 30: Regler
- 31: Stellgröße für Fahrgeschwindigkeit
- 32: Stellglied
- 33: Istwert der Fahrgeschwindigkeit
- 34: Störgröße
- 35: Regelstrecke Schneidwerk
- 36: Durchsatz des Schneidwerks
- 37: Durchsatz der Erntemaschine
- 38: Totzeit
- 39: Messglied
- 40: Sensoren
- 41: Leistung Istwert
- 42: Leistung Sollwert
- 43: Regler Schnittsystemauslastung

- A: Antriebsachse
- F: Fahrtrichtung
- H₁, H₂, H₃: Hubpositionsbereich
- M: Mittelachse

## Patentansprüche

1. Verfahren zur Analyse des Betriebszustandes eines Schneidwerks (1) zum Mähen von Erntegut, wobei das Schneidwerk (1) zumindest ein in einer Hubrichtung H hin und her angetriebenes Mähmesser (2, 2') aufweist und das Mähmesser (2, 2') Schneiden (23, 24) aufweist, die mit Gegenschneiden (25, 25', 26, 26') des Schneidwerks (1) zusammenwirken, mit den folgenden Verfahrensschritten:
Erfassen eines die Hubposition des Mähmessers (2, 2') repräsentierenden Signals,
Erfassen eines die Messerkraft (29) zum Antreiben des Mähmessers (2, 2') repräsentierenden Signals in Abhängigkeit der Hubposition, und
Bestimmung von Erntegut- und/oder Schnittsystemeigenschaften anhand einer Auswertung des die Messerkraft (29) repräsentierenden Signals in Abhängigkeit der Hubposition.

2. Verfahren nach Anspruch 1,
**dadurch gekennzeichnet,**
**dass** die Bestimmung von Erntegut- und/oder Schnittsystemeigenschaften zumindest eine Eigenschaft aus der Gruppe bestehend aus Bestandsdichte des Ernteguts, Erntegutart, Erntegutfeuchte, Unkrautbestandteile, Kollision, Verschleißzustand des Schneidwerks und Defekt des Schneidwerks umfasst.

3. Verfahren nach einem der vorangehenden Ansprüche,
**dadurch gekennzeichnet,**
**dass** die Hubbewegung des Mähmessers (2, 2') über den gesamten Hub des Mähmessers (2, 2') in verschiedene Hubpositionsbereiche (H1, H2, H3) eingeteilt wird.

4. Verfahren nach Anspruch 3, **dadurch gekennzeichnet,**
**dass** Hubpositionsbereiche als Schnittbereiche (H2) definiert werden, in denen die Schneiden (23, 24) des Mähmessers (2, 2') mit den Gegenschneiden (25, 25', 26, 26') einen Schnitt des Ernteguts durchführen.

5. Verfahren nach einem der vorangehenden Ansprüche 3 oder 4, **dadurch gekennzeichnet,**
**dass** Hubpositionsbereiche als Überhubbereiche (H3) definiert werden, in denen die Schneiden (23, 24) des Mähmessers (2, 2') an Mähfingern (12) oder an Messerklingen eines Gegenmessers vorbei oder hindurchgeführt werden, ohne einen Schnitt des Ernteguts durchzuführen.

6. Verfahren nach einem der vorangehenden Ansprüche 3 bis 5, **dadurch gekennzeichnet,**
**dass** Hubpositionsbereiche als schnittunabhängige Bereiche (H1) definiert werden, in denen die Schneiden (23, 24) des Mähmessers (2, 2') weder mit den Gegenschneiden (25, 25', 26, 26') einen Schnitt des Ernteguts durchführen noch an Mähfingern (12) oder an Messerklingen eines Gegenmessers vorbei oder hindurchgeführt werden.

7. Verfahren nach einem der vorangehenden Ansprüche 3 bis 6, **dadurch gekennzeichnet,**
**dass** die durchschnittliche und/oder maximale Messerkraft oder eine von der Messerkraft abgeleitete Messgröße in bestimmten Hubpositionsbereichen ermittelt wird und
- die Ergebnisse verschiedener Hubpositionsbereiche (H1, H2, H3) eines einzelnen Hubs des Mähmessers (2, 2') miteinander verglichen werden,
- die Ergebnisse von gleichen Hubpositionsbereichen (H1, H2, H3) verschiedener Hübe des Mähmessers (2, 2') miteinander verglichen werden, und/oder
- das Ergebnis eines einzelnen Hubpositionsbereichs (H1, H2, H3) mit einem Referenzwert für diesen Hubpositionsbereich verglichen wird.

8. Verfahren nach einem der vorangehenden Ansprüche 3 bis 7, **dadurch gekennzeichnet,**
**dass** anhand des die Messerkraft repräsentierenden Signals oder einer von der Messerkraft abgeleitete Messgröße in Abhängigkeit der Hubposition eine dem Schneidwerk (1) nachgelagerte Einheit zur Verarbeitung des Ernteguts und/oder die Fahrgeschwindigkeit einer das Schneidwerk (1) tragenden landwirtschaftlichen Erntemaschine (8) gesteuert wird.

9. Schneidwerk (1) für eine landwirtschaftliche Erntemaschine (8) zum Mähen von Erntegut, umfassend
zumindest ein in einer Hubrichtung hin und her angetriebenes Mähmesser (2, 2'),
einen das Mähmesser (2, 2') antreibenden Antrieb (4, 4'),
einen Sensor zum Erfassen eines die Hubposition des Mähmessers (2, 2') repräsentierenden Signals,
und eine Verarbeitungseinheit (7, 7') zum Auswerten und Aufzeichnen der erfassten Signale, **gekennzeichnet durch** einen Sensor zum Erfassen eines die Messerkraft zum Antreiben des Mähmessers (2, 2') repräsentierenden Signals.

10. Schneidwerk nach Anspruch 9,
**dadurch gekennzeichnet,**
**dass** jedem Mähmesser (2, 2') eine Verarbeitungseinheit (7, 7') zugeordnet ist.

11. Schneidwerk nach Anspruch 10,
**dadurch gekennzeichnet,**
**dass** das Schneidwerk (1) ferner eine zentrale Verarbeitungseinheit (10) aufweist, die mit den Verarbeitungseinheiten (7, 7') mehrerer Mähmesser (2, 2') zum Datenaustausch verbunden ist.

## Claims

1. Method for analysing the operating state of a cutting device (1) for cutting harvesting crop, wherein the cutting device (1) has at least one mower knife (2, 2') which is driven reciprocally in the travel direction and the mower knife (2, 2') has cutting edges (23, 24), which interact with counter cutting edges (25, 25', 26, 26'), comprising the following method steps:
detecting a signal, representing the travel position of the mower knife (2, 2'),
detecting a signal representing the knife force (29) for driving the mower knife (2, 2') in dependency of the travel position, and
determining the properties of the harvesting crop and/or cutting system by means of evaluating the signal representing the knife force (29) in dependency of the travel position.

2. Method according to claim 1,
**characterised in**
**that** the determining of the properties of the harvesting crop and/or cutting system comprise at least one property from the group consisting of the density of the crop, type of crop, crop moisture level, weed components, collision, wear condition of the cutting device and defects of the cutting device.

3. Method according to anyone of the preceding claims, **characterised in**
**that** the travel movement of the mower knife (2, 2') is divided across the total travel of the mower knife (2, 2') into different travel position ranges (H1, H2, H3).

4. Method according to claim 3,
**characterised in**
**that** travel position ranges are defined as cutting ranges (H2), in which the cutting edges (23, 24) of the mower knife (2, 2') with the counter cutting edges (25, 25', 26, 26') carry out a cutting of the crop.

5. Method according to anyone of the preceding claims 3 or 4,
**characterised in**
**that** the travel position ranges are defined as over-stroke ranges (H3), in which the cutting edges (23, 24) of the mower knife (2, 2') are guided passed or through the mowing fingers (12) or the knife blades of a counter knife, without carrying out a cutting of the crop.

6. Method according to anyone of the preceding claims 3 to 5,
**characterised in**
**that** travel position ranges are defined as the cutting independent ranges (H1), in which the cutting edges (23, 24) of the mower knife (2, 2') carry out a cutting of the crop neither with the counter cutting edges (25, 25', 26, 26') nor on mowing fingers (12) or are guided passed or through the knife blades of a counter knife.

7. Method according to anyone of the preceding claims 3 to 6, **characterised in that** the average and/or maximum knife force or a measuring value derived from the knife force is determined in specific travel position ranges and
- the results of the different travel position ranges (H1, H2, H3) of an individual travel of the mowing knife (2, 2') are compared with each other,
- the results of the same travel position ranges (H1, H2, H3) of different travels of the mower knife (2, 2') are compared with each other, and/or
- the result of an individual travel position range (H1, H2, H3) is compared with a reference value for this travel position range.

8. Method according to anyone of the preceding claims 3 to 7,
**characterised in**
**that** on the basis of the signal representing the knife force or of a measuring value derived from the knife force in dependency of the travel position, a unit for processing the crop arranged behind the cutting device (1) and/or the driving velocity of an agricultural harvesting machine (8) carrying the cutting device (1) is controlled.

9. Cutting device (1) for an agricultural harvesting machine (8) for mowing harvesting crop, comprising
at least one mowing knife (2, 2') driven reciprocally in a travel direction,
a drive (4, 4') driving the mowing knife (2, 2'),
a sensor for capturing a signal representing the travel position of the mowing knife (2, 2'),
and
a processing unit (7, 7') for evaluating and recording the captured signals, **characterised by** a sensor for capturing a signal representing the knife force for driving the mowing knife (2, 2').

10. Cutting device according to claim 9,
**characterised in**
**that** to each mowing knife (2, 2') a processing unit (7, 7) is assigned.

11. Cutting device according to claim 10,
**characterised in**
the cutting device (1) has further a central processing unit (10), which is connected to the processing units (7, 7') of several mowing knives (2, 2') for the data exchange.

## Revendications

1. Procédé d'analyse de l'état de fonctionnement d'une barre de coupe (1) pour tondre des produits à produits à récolter, la barre de coupe (1) présentant au moins une lame de tonte (2, 2') entraînée en va-et-vient dans un sens de levage H et la lame de tonte (2, 2') présentant des couteaux (23, 24) qui interagissent avec des contre-couteaux (25, 25', 26, 26') de la barre de coupe (1), comportant les étapes opératoires suivantes :
détection d'un signal représentant la position de levage de la lame de tonte (2, 2'),
détection d'un signal représentant la force de lame (29) pour l'entraînement de la lame de tonte (2, 2') en fonction de la position de levage, et
définition de propriétés des produits à récolter et/ou du système de coupe à partir d'une exploitation du signal représentant la force de lame (29) en fonction de la position de levage.

2. Procédé selon la revendication 1,
**caractérisé en ce que**
la définition de propriétés des produits à récolter et/ou du système de coupe comprend au moins une propriété du groupe composé de la densité des produits à récolter, du type de produits à récolter, de l'humidité des produits à récolter, des composantes adventices, de la collision, de l'état d'usure de la lame de coupe et de la défectuosité de la lame de coupe.

3. Procédé selon une des revendications précédentes,
**caractérisé en ce que**
le mouvement de levage de la lame de tonte (2, 2') sur toute la course de la lame de tonte (2, 2') est divisé en différentes zones de position de levage (H1,H2,H3)

4. Procédé selon la revendication 3,
**caractérisé en ce que**
sont définies comme zones de coupe (H2) des zones de position de levage dans lesquelles les couteaux (23, 24) de la lame de tonte (2, 2') exécutent avec les contre-couteaux (25, 25', 26, 26') une coupe de produits à récolter.

5. Procédé selon une des revendications précédentes 3 ou 4,
**caractérisé en ce que**
les zones de position de levage sont définies sous forme de zones de sur-levage (H3) dans lesquelles les couteaux (23, 24) de la lame de tonte (2, 2') passent devant ou à travers des doigts de tonte (12) ou au niveau de lames de couteau d'un contre-couteau sans exécuter une coupe des produits à récolter.

6. Procédé selon une des revendications précédentes 3 à 5,
**caractérisé en ce que**
les zones de position de levage sont définies sous forme de zones indépendantes de la coupe (H1) dans lesquelles les couteaux (23, 24) de la lame de tonte (2, 2') ni n'exécutent une coupe de produits à récolter avec les contre-couteaux (25, 25', 26, 26'), ni ne passent au niveau ou à travers des doigts de coupe (12) ou des lames de couteau d'un contre couteau.

7. Procédé selon une des revendications précédentes 3 à 6,
**caractérisé en ce que**
la force de lame moyenne et/ou maximale ou un paramètre de mesure dérivé de la force de lame est déterminé dans certaines zones de position de levage et
- les résultats des différentes zones de position de levage (H1, H2, H3) d'une course individuelle de la lame de tonte (2, 2') sont comparés les uns aux autres,
- les résultats de zones de position de levage identiques (H1, H2, H3) de différentes courses de la lame de tonte (2, 2') sont comparés les uns aux autres,
- le résultat d'une zone de position de levage individuelle (H1, H2, H3) est comparé à une valeur de référence pour cette zone de position de levage.

8. Procédé selon une des revendications précédentes 3 à 7,
**caractérisé en ce que**,
à partir du signal représentant la force de lame ou un paramètre de mesure dérivé de la force de lame, en fonction de la position de levage, une unité située en aval de la lame de coupe (1) pour le traitement des produits à récolter et/ou la vitesse de circulation d'une machine à récolter agricole (8) portant la barre de coupe (1) est commandée.

9. Barre de coupe (1) pour machine à récolter agricole (8) pour la tonte de produits à récolter, comprenant au moins une lame de tonte (2, 2') entraînée en va-et-vient dans un sens de levage,
un organe de commande (4, 4') entraînant la lame de tonte (2, 2'),
un capteur pour la détection d'un signal représentant la position de levage de la lame de tonte (2, 2'),
une unité de traitement (7, 7') pour l'exploitation et l'enregistrement des signaux détectés, **caractérisée par** un capteur pour la détection d'un signal représentant la force de lame pour l'entraînement de la lame de tonte (2, 2').

10. Barre de coupe selon la revendication 9,
**caractérisé en ce**
**qu'**une unité de traitement (7, 7') est associée à chaque lame de tonte (2, 2').

11. Barre de coupe selon la revendication 10,
**caractérisé en ce que**
la barre de coupe (1) présente en outre une unité de traitement centrale (10) qui est connectée aux unités de traitement (7, 7') de plusieurs lames de tonte (2, 2') pour l'échange de données.
